(19) Europäisches Patentamt
European Patent Office
Office européen des brevets

(11) EP 2 860 214 B1

(12) **EUROPEAN PATENT SPECIFICATION**

(45) Date of publication and mention of the grant of the patent:
**26.07.2017 Bulletin 2017/30**

(21) Application number: **13801414.7**

(22) Date of filing: **04.06.2013**

(51) Int Cl.:
***B29C 70/46*** (2006.01) ***B29C 43/52*** (2006.01)
***B29K 307/04*** (2006.01) ***B29L 31/00*** (2006.01)
***B29C 43/02*** (2006.01) ***B29K 67/00*** (2006.01)
***C08L 67/02*** (2006.01) ***C08J 5/04*** (2006.01)

(86) International application number:
**PCT/JP2013/065476**

(87) International publication number:
**WO 2013/183636 (12.12.2013 Gazette 2013/50)**

# (54) MOLDING MATERIAL, MOLDED BODY OF SAME, AND METHOD FOR PRODUCING MOLDED BODY

FORMMASSE, FORMKÖRPER DARAUS UND VERFAHREN ZUR HERSTELLUNG EINES FORMKÖRPERS

MATÉRIAU DE MOULAGE, CORPS MOULÉ DE CELUI-CI, ET PROCÉDÉ POUR PRODUIRE UN CORPS MOULÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **06.06.2012 JP 2012128915**

(43) Date of publication of application:
**15.04.2015 Bulletin 2015/16**

(73) Proprietor: **Teijin Limited**
**Osaka-shi, Osaka 541-0054 (JP)**

(72) Inventors:
- **MATSUDA Takeshi**
  **Matsuyama-shi**
  **Ehime 791-8044 (JP)**
- **YOKOMIZO Hodaka**
  **Matsuyama-shi**
  **Ehime 791-8044 (JP)**
- **FURUKAWA Ikko**
  **Matsuyama-shi**
  **Ehime 791-8044 (JP)**

(74) Representative: **Carpmaels & Ransford LLP**
**One Southampton Row**
**London WC1B 5HA (GB)**

(56) References cited:
**JP-A- S6 189 248** **JP-A- H01 271 439**
**JP-A- H01 271 439** **JP-A- 2013 121 988**
**US-A- 4 737 540** **US-A- 5 935 508**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

Technical Field

The present invention relates to a material for molding in which a polybutylene terephthalate is adhered to carbon fiber bundles to be easily impregnated, a shaped product excellent in mechanical properties, which is obtained from the material for molding, and a method for manufacturing the shaped product.

Background Art

A known technique for obtaining a resin material which has high strength and in which a brittle fracture tends to be suppressed is to reinforce a resin with carbon fibers to obtain a composite material. In particular, a composite material obtained by reinforcing a thermoplastic resin as a matrix resin with carbon fibers (the composite material are also called a carbon-fiber-reinforced thermoplastic resin, and are hereinafter often abbreviated to CFRTP) is excellent in terms of processability and suitability for recyclability and are expected to be utilized in various fields.

As a method for manufacturing a composite material including carbon fibers and a thermoplastic resin, a method in which carbon fiber bundles are impregnated with a molten-state thermoplastic resin having a relatively high viscosity to obtain a composite material. In this manufacturing method, it is necessary that an impregnation treatment for carbon fiber bundles with a thermoplastic resin is conducted for a long term at an excessively high pressure under a condition where a melt viscosity of the thermoplastic resin is lowered by elevating an ambient temperature, in order to avoid a trouble that strength of a molded article is reduced due to insufficient impregnation. In such an impregnation treatment for a long term at a high pressure, there has been a problem, for example, that manufacturing cost is increased.

As techniques for facilitating the impregnation of a thermoplastic resin into carbon fiber bundles, a method in which carbon fibers are intertwined with thermoplastic resin fibers to prepare fiber bundles, and heat and pressure are applied thereto to melt the thermoplastic resin so as to facilitate impregnation (patent document 1), a method in which carbon fiber bundles are impregnated with a molten resin having a low molecular weight and then impregnated with a thermoplastic resin having a high molecular weight (patent document 2), and a method in which carbon fibers are opened in a bath of a molten resin and are impregnated therewith (patent document 3), and the like, are disclosed. Furthermore, patent document 4 describes a method for facilitating impregnation of a thermoplastic resin into carbon fibers themselves, the method for adjusting a sizing agent of the carbon fibers to be a sizing agent having good wettability with the resin.

As described above, in the conventional production methods, it has been necessary to conduct an independent impregnation step under special conditions therein in order to sufficiently impregnate reinforcing fiber bundles with a thermoplastic resin. Because of this, the conventional methods are still unable to provide CFRTP products (shaped products) with excellent properties and appearance at such a low manufacturing cost that these products are increasingly usable in various applications, and do not sufficiently meet expectations of each field for CFRTP. Particularly, for CFRTP in which a polybutylene terephthalate (hereinafter sometimes abbreviated as PBT) is used as a thermoplastic resin, it is expected to be applicable to various functional parts such as automobile parts and prompt solution of the above problem has been desired.

Citation List

Patent Documents

Patent Document 1: JP-A-3-121146

Patent Document 2: JP-A-3-181528

Patent Document 3: JP-A-5-112657

Patent Document 4: JP-A-6-166961

Summary of the Invention

Problems that the Invention is to Solve

An object of the invention is to provide a carbon-fiber-reinforced shaped product of a polybutylene terephthalate, the shaped product having excellent properties and an excellent appearance, a method for manufacturing the shaped

product by a simple process without incurring an increase in manufacturing cost, and a material for molding to enable the manufacturing method.

Means for Solving the Problems

The present inventors, during investigations for solving the conventional problems described above, have found that carbon fiber bundles including a specific compound (hereinafter, the bundles are referred to as carbon fiber bundles to be easily impregnated) are exceedingly easily impregnated with plasticated polybutylene terephthalate. Furthermore, the inventors have discovered a surprising phenomenon in which when the polybutylene terephthalate is adhered to the carbon fiber bundles to be easily impregnated to obtain a material for molding and this material for molding is made to be present in a molding die under a condition at the plasticizing temperature of the polybutylene terephthalate, then the polybutylene terephthalate is impregnated into the carbon fiber bundles to be easily impregnated and spreads in the die while dispersing the carbon fiber bundles. The inventors thus have found that a shaped product of a composite material having excellent properties and an excellent appearance can be produced without conducting any treatment for impregnating reinforcing fibers with a thermoplastic resin in an independent step, as in conventional techniques, and have completed the invention. Essential points of the invention are shown below.

1. A material for molding, including: carbon fiber bundles to be easily impregnated, including carbon fibers and at least one impregnation aid in an amount of 3 to 15 parts by mass based on 100 parts by mass of the carbon fibers, the at least one impregnation aid satisfying the following requirements 1 and 2; and a polybutylene terephthalate in an amount of 50 to 2000 parts by mass based on 100 parts by mass of the carbon fibers, the polybutylene terephthalate adhered to the carbon fiber bundle to be easily impregnated:

Requirement 1: liquid at 280°C has a viscosity of 10 Pa·s or less;
Requirement 2: a reduction ratio in glass transition temperature (ΔTg) of larger than 0.2 (°C/%), the reduction ratio in glass transition temperature (ΔTg) being defined by the following expression (A) including a glass transition temperature $Tg_1$ (°C) of a resin composition obtained by incorporating the impregnation aid in an amount of 1 part by mass to 100 parts by mass based on 100 parts by mass of the polybutylene terephthalate, a glass transition temperature $Tg_0$ (°C) of the polybutylene terephthalate, and a content (%) of the impregnation aid:

$$\text{Reduction ratio in glass transition temperature } (\Delta Tg)\ (°C/\%) = ((Tg_0\ (°C)) - (Tg_1\ (°C))/(\text{content of impregnation aid } (\%)) \qquad (A)$$

wherein the content of impregnation aid (%) is defined by the following expression (B):

$$\text{Content of impregnation aid } (\%) = 100 \times (\text{amount of impregnation aid (parts by mass)})/(\text{amount of the polybutylene terephthalate (parts by mass)}) \qquad (B),$$

wherein the impregnation aid is one or more selected from the group consisting of a phosphoric acid ester and an aliphatic hydroxycarboxylic acid-based polyester, wherein the phosphoric acid ester is an aromatic phosphoric acid ester having a boiling point under normal pressure of 340°C or higher and a heating loss at 280°C under a nitrogen atmosphere of 2 %/minute or less.

4. The above material for molding, wherein the aromatic phosphoric acid ester is represented by the following general formula (1):

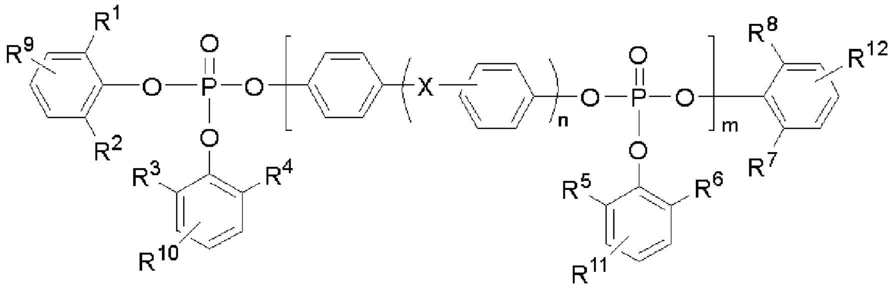

(1)

wherein $R^1$ to $R^{12}$ each independently represent a hydrogen atom or an alkyl group having 1 to 4 carbon atoms, X is a bond, $-CH_2-$, $-C(CH_3)_2-$, -S-, $-SO_2-$, -O-, -CO- or -N=N-, n is an integer of 0 or 1, and m is an integer of 0 to 5.

5. The above material for molding, wherein the aliphatic hydroxycarboxylic acid-based polyester is one or more selected from the group consisting of homopolymers of each of ε-caprolactone, δ-caprolactone, β-propiolactone, γ-butyrolactone, δ-valerolactone, γ-valerolactone, and enantholactone, the homopolymers having a weight-average molecular weight of 3,000 to 50,000, and copolymers of two or more monomers of ε-caprolactone, δ-caprolactone, β-propiolactone, γ-butyrolactone, δ-valerolactone, γ-valerolactone, and enantholactone, the copolymers having a weight-average molecular weight of 3,000 to 50,000.

6. The above material for molding, which has a sheath-core structure in which the carbon fiber bundles to be easily impregnated are a core component and the polybutylene terephthalate is a sheath component.

7. The above material for molding, wherein a form of the material for molding is a pellet.

8. The above material for molding, wherein a length of the pellet in a longitudinal direction is from 3 to 10 mm.

9. A shaped product obtained from the above material for molding.

10. The above shaped product, wherein the carbon fibers derived from the carbon fiber bundles to be easily impregnated are dispersed in a state of having an average fiber length of 0.3 mm or more.

11. The above shaped product, wherein a content ratio (% by mass) of the carbon fibers and a tensile strength determined by examination of a 4 mm dumbbell according to ISO 527 standard have a relationship satisfying the following expression (C):

$$\text{Content ratio of carbon fiber (\% by mass)} \times 3 + 90 < \text{Tensile strength (MPa)} \ldots \text{(C)}.$$

12. A method for manufacturing the above shaped product, the method including: placing the material for molding in a mold under a condition of a plasticizing temperature or higher of the polybutylene terephthalate to impregnate the polybutylene terephthalate into the carbon fiber bundles to be easily impregnated in the material for molading; molding the material for molding while separating and dispersing carbon fiber bundles in the carbon fiber bundles to be easily impregnated; and then cooling a molded material.

Advantage of the Invention

According to the invention, it is possible to provide a carbon-fiber-reinforced shaped product of a polybutylene terephthalate having excellent properties and an excellent appearance, a simple method for manufacturing the shaped product without incurring an increase in production cost, and a material for molding to enable the manufacturing method.

Description of Embodiments

The present invention relates to: a material for molding characterized by including carbon fiber bundles to be easily impregnated, including carbon fibers, at least one impregnation aid in an amount of 3 to 15 parts by mass based on 100 parts by mass of the carbon fibers, the at least one impregnation aid satisfying the following requirements 1 and 2, and a polybutylene terephthalate in amount of 50 to 2,000 parts by mass based on 100 parts by mass of the carbon fibers, the polybutylene terephthalate adhered to the carbon fiber bundles to be easily impregnated; a shaped product obtained from the material for molding; and a method for manufacturing the shaped product:

Requirement 1: the liquid at 280°C has a viscosity of 10 Pa·s or less;

Requirement 2: a reduction ratio in glass transition temperature (ΔTg) of larger than 0.2 [°C/%], the reduction ratio being defined by the following expression (A) including a glass transition temperature $Tg_1$ [°C] of a resin composition

obtained by incorporating the impregnation aid in an amount of 1 part by mass to 100 parts by mass based on 100 parts by mass of the polybutylene terephthalate, a glass transition temperature $Tg_0$ [°C] of the polybutylene terephthalate, and a content (%) of the impregnation aid:

$$\text{Reduction ratio in glass transition temperature } (\Delta Tg)\ [°C/\%] = [(Tg_0\ [°C])-(Tg_1\ [°C])]/(\text{content of impregnation aid } [\%]) \qquad (A)$$

wherein the content of impregnation aid [%] is defined by the following expression (B):

$$\text{Content of impregnation aid } [\%] = 100\times(\text{amount of impregnation aid [parts by mass]})/(\text{amount of the polybutylene terephthalate [parts by mass]}) \qquad (B).$$

Embodiments of the invention are explained below in detail. It is a matter of course that other embodiments can be within the scope of the invention.

[Carbon fiber bundles to be easily impregnated]

The carbon fiber bundles to be easily impregnated in the present invention are carbon fiber bundles characterized by including carbon fibers and at least one impregnation aid in an amount of 3 to 15 parts by mass based on 100 parts by mass of the carbon fibers, the at least one impregnation aid satisfying the following requirements 1 and 2, and thereby the 7 carbon fiber bundles are easily impregnated with a polybtylene terephthalate (preferably, a plasticated polybutylene terephthalate):

Requirement 1: the liquid at 280°C has a viscosity of 10 Pa·s or less;
Requirement 2: a reduction ratio in glass transition temperature (ΔTg) of larger than 0.2 [°C/%], the reduction ratio being defined by the following expression (A) including the glass transition temperature $Tg_1$ [°C] of a resin composition obtained by incorporating the impregnation aid in an amount of 1 part by mass to 100 parts by mass based on 100 parts by mass of the polybutylene terephthalate, the glass transition temperature $Tg_0$ [°C] of the polybutylene terephthalate, and a content (%) of the impregnation aid:

$$\text{Reduction ratio in glass transition temperature } (\Delta Tg)\ [°C/\%] = [(Tg_0\ [°C])-(Tg_1\ [°C])]/(\text{content of impregnation aid } [\%]) \qquad (A)$$

wherein the content of impregnation aid [%] is defined by the following expression (B):

$$\text{Content of impregnation aid } [\%] = 100\times(\text{amount of impregnation aid [parts by mass]})/(\text{amount of the polybutylene terephthalate [parts by mass]}) \qquad (B).$$

The carbon fiber bundles to be easily impregnated may be any carbon fiber bundles including the impregnation aid in a specific amount relative to the carbon fibers, and there are no limitations on a manufacturing method of the carbon fiber bundles to be easily impregnated and on the state in which the carbon fibers and the impregnation aid are included.

The impregnation aid used in the invention should satisfy requirement 1, and this means that the impregnation aid is in a low viscosity state at 280°C, which is a representative processing temperature for general purpose polybutylene terephthalates, and is capable of viscosity measurement at 280°C. The viscosity of the liquid of the impregnation aid at 280°C is preferably 8 Pa·s or less, more preferably 6 Pa·s or less.

With respect to requirement 1, as a method for measuring the viscosity of the impregnation aid as a liquid, a measurement method by using a parallel-plate viscometer equipped with a high-temperature chamber is used.

Furthermore, the impregnation aid used in the invention should satisfy requirement 2. With respect to requirement 2, the impregnation aid needs not satisfy [reduction ratio in glass transition temperature (ΔTg)]>0.2 [°C/%] throughout the whole blending ratio range of 1 to 100 parts by mass based on 100 parts by mass of the polybutylene terephthalate,

and a part of the blending ratio range shows a reduction ratio in glass transition temperature (ΔTg) of larger than 0.2 °C/%.

By a reduction ratio in glass transition temperature (ΔTg) of larger than 0.2 °C/%, an effect of facilitating impregnation is developed, and a ΔTg larger than 0.3 °C/% is more preferable. The fact that ΔTg is 0.2 °C/% or less means a state where the impregnation aid is not compatible with the polybutylene terephthalate. Therefore it is presumed that a measured value of Tg is substantially the same as the Tg of the polybutylene terephthalate.

Even when an impregnation aid having a ΔTg of 0.2 °C/% or less is added to carbon fiber bundles, and a resultant in which the polybutylene terephthalate is adhered thereto is molded, this impregnation aid shows a considerably low impregnation facilitating effect, resulting in an obtained shaped product has dispersion failures of the carbon fibers. With respect to requirement 2, the method for measuring the glass transition temperature of the polybutylene terephthalate or of a resin composition including the polybutylene terephthalate and the impregnation aid is a method in which a differential scanning calorimeter (DSC) is used.

The impregnation aid has a boiling point under normal pressure of 340°C or higher and a heating loss at 280°C under a nitrogen atmosphere of 2%/minute or less.

The above phrase "boiling point under normal pressure is 340°C or more" is understood that the case where boiling point of a certain impregnation aid under normal pressure is not clearly measured but boiling clearly does not occur at 340°C and the aid still remains as liquid satisfies the requirement. Moreover, with regard to the phrase "heating loss at 280°C under a nitrogen atmosphere is 2 %/minute or less", the case where a certain impregnation aid vigorously decomposes at 280°C under a nitrogen atmosphere and the heating loss cannot be correctly measured is understood not to satisfy the requirement.

Meanwhile, the above heating loss is preferably calculated based on the following formula (i), by using mass change measured with a differential thermal balance from an initial mass $W_{pre}$ (g) of a specimen of the impregnation aid to the mass $W_{post}$ (g) of the specimen after being heated from room temperature (5 to 35°C) to 280°C at 10°C/minute and subsequently 9 further kept at 280°C for 15 minutes. More preferred is an average value obtained by the measurement and calculation using three or more specimens.

$$\text{Heating loss (\%/minute)} = 100 \times \{W_{pre}\ (g) - W_{post}\ (g)\}/W_{pre}\ (g)/15\ (\text{minute}) \quad (i)$$

In the invention, the amount of the impregnation aid contained in the carbon fiber bundles to be easily impregnated is from 3 to 15 parts by mass, preferably from 5 to 12 parts by mass based on 100 parts by mass of the carbon fiber. When the amount is less than 3 parts by mass, the impregnation property of the polybutylene terephthalate into the carbon fibers becomes insufficient. While when the amount is more than 15 parts by mass, the impregnation property of the polybutylene terephthalate into the carbon fibers is superior, heat resistance of the shaped product decreases due to a decrease in the glass transition temperature of the polybutylene terephthalate as a matrix resin, so that the case is not preferred.

The carbon fiber bundles to be easily impregnated used in the invention may be one which contains a plurality of impregnation aids. The impregnation aid used in the invention is at least one selected from the group consisting of a phosphoric acid ester and a polyester based on an aliphatic hydroxycarboxylic acid. It is a matter of course that the impregnation aids may include both a phosphoric acid ester and a polyester based on an aliphatic hydroxycarboxylic acid. The phosphoric acid ester and polyesters based on an aliphatic hydroxycarboxylic acid which are usable as an impregnation aid will be described later in detail.

Representative methods for manufacturing the carbon fiber bundles to be easily impregnated include a method in which an impregnation aid is impregnated into general-purpose carbon fiber bundles by at least one method selected from the group consisting of a dipping method, a spraying method, a roller transfer method, a slit coater method, and the like. In the case where an impregnation aid is impregnated into carbon fiber bundles by any of these methods, it is thought that the impregnation aid is mainly adhered to the surface of the carbon fiber bundles, and some parts of the impregnation aid are impregnated into inner parts of the carbon fiber bundles.

With respect to the form of the impregnation aid in the manufacturing of the carbon fiber bundles to be easily impregnated, the impregnation aid can be handled as an aqueous emulsion, a solution obtained by dilution with an organic solvent, or a heated liquid in a viscous or molten state. A preferred combination of a production method and a form of an impregnation aid includes a dipping or a roller transfer method in the case of an aqueous emulsion. This combination necessitates a drying step in which the carbon fiber bundles are dried in an atmosphere of 100°C or more in order to sufficiently remove the water. In the case of a heated viscous liquid, a general coating technique such as a slit coater method is usable, and it is possible to adhere the heated viscous liquid in a suitable amount to the carbon fiber bundles and then to perform even adhesion with a smoothing roll or the like.

In order to obtain a shaped product in which the carbon fibers are evenly dispersed in the polybutylene terephthalate by molding the material for molding of the invention, it is preferred to adhere to the impregnation aid to the carbon fiber bundles as evenly as possible. Examples of methods for more evenly adhering an impregnation aid to carbon fiber bundles include a method in which the impregnation aid is adhered to the carbon fiber bundles by any of the methods shown above and the resultant is subjected to a re-heat treatment by heating to a temperature or more which the viscosity of the impregnation aid decreases sufficiently. For the heat treatment, a hot air, a hot plate, a roller, an infrared-ray heater, and the like, can be used. It is preferred to use rollers.

[Carbon Fiber]

The carbon fibers contained in the material for molding of the invention may be any carbon fibers, such as polyacrylonitrile (PAN)-based carbon fibers, petroleum/petroleum pitch-based carbon fibers, rayon-based carbon fibers, or lignin-based carbon fibers. In particular, PAN-based carbon fibers, which are produced from PAN as a starting material, are preferred because these carbon fibers are excellent in terms of factory-scale manufacturability and mechanical property.

The above carbon fiber preferably has an average diameter of 3 to 12 μm, and one having an average diameter of 5 to 10 μm can be more preferably used, and one having an average diameter of 5 to 7 μm can be still more preferably used. Meanwhile, a common carbon fiber is a carbon fiber filament in which 1,000 to 50,000 single fibers are bundled. The carbon fiber bundles in the invention includes such common carbon fiber filaments and also includes those obtained by superposing and doubling the carbon fiber filaments, those obtained by twisting the doubled one into a twisted yarn, and the like.

As the carbon fiber to be contained in the material for molding of the invention, in order to enhance the adhesiveness between the carbon fibers and the polybutylene terephthalate, a carbon fiber having an oxygen-containing functional group introduced onto the surface of the carbon fiber by a surface treatment is also preferred.

Moreover, in the case where the carbon fiber bundles to be easily impregnated is formed by incorporating the impregnation aid into the carbon fiber bundle as mentioned above, in order to stabilize the step of homogeneously adhering the impregnation aid to the carbon fiber bundles, the carbon fiber bundles are preferably treated with a sizing agent for imparting a bundling property. As the sizing agent, those known for manufacturing carbon fiber filament can be used. Moreover, as the carbon fiber bundles, one in which oil used for enhancing a sliding ability at manufacturing remains can be used in the invention of the present application without any trouble. Meanwhile, there is a case where an expression of a surface treatment agent is used as a broader concept including the impregnation aid and the other treatment agents such as the above sizing agent.

[Phosphoric Acid Ester]

The phosphoric acid esters usable as an impregnation aid in the invention are not particularly limited so long as they satisfy the requirements of claim 1. Examples thereof include a phosphoric acid ester monomer or a blend of oligomeric phosphoric acid esters. Specific examples thereof include trimethyl phosphate, triethyl phosphate, tributyl phosphate, trioctyl phosphate, tributoxyethyl phosphate, and an aromatic phosphoric acid ester represented by triphenyl phosphate. The aromatic phosphoric acid ester is used in the present invention. Utilised from the standpoint of molding processability is a phosphoric acid ester that has a loss on heating in a nitrogen atmosphere at 280°C, which is a molding temperature for polybutylene terephthalates, of 2 %/min or less and that has a boiling point at ordinary pressure of 340°C or more. When the heating loss and the boiling point fall within the above ranges, the phosphoric acid ester is not decomposed or evaporated during kneading and hence the carbon fiber is impregnated with the resin until completion of the kneading, so that the case is preferable and the appearance of the shaped product is more improved.

In the invention, the term of ordinary pressure means a pressure which is approximately the pressure of the normal-state atmosphere (1,013 hPa) to which any operation for elevating or lowering the pressure is not intentionally performed, unless otherwise indicated. That term means an air pressure in the range of generally 800 to 1,050 hPa, usually 1,000 to 1,030 hPa, more usually 1,009 to 1,017 hPa. As a phosphoric acid ester having such heat resistance, an aromatic phosphoric acid ester represented by general formula (1) is suitably used.

In the invention, the aromatic phosphoric acid ester represented by general formula (1) in which $R^1$ to $R^{12}$ each represent a hydrogen atom or an alkyl group having 1 to 4 carbon atoms, such as methyl, ethyl, propyl, isopropyl, butyl, isobutyl, s-butyl, or t-butyl, is preferred because use of these esters is capable of remarkably improving melt flowability and light resistance of the shaped product. Preferred of these alkyl groups are the alkyl groups having 1 to 3 carbon atoms. More preferred is methyl and/or ethyl.

Preferred of the aromatic phosphoric acid ester represented by general formula (1) are ones in which an aromatic group represented by the formula (1):

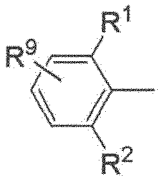 , 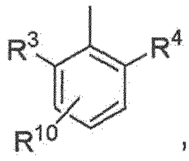 , 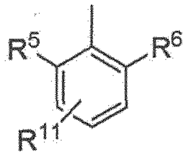 , 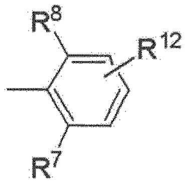

each independently represents a phenyl group, 2-methylphenyl group, 3-methylphenyl group, 4-methylphenyl group, 2-ethylphenyl group, 3-ethylphenyl group, 4-ethylphenyl group, 2-propylphenyl group, 3-propylphenyl group, 4-propylphenyl group, 2-isopropylphenyl group, 3-isopropylphenyl group, 4-isopropylphenyl group, 2-butylphenyl group, and 3-butylphenyl group. This is because these esters have high heat resistance. Among them, a phenyl group which has two alkyl groups having 1 to 3 carbon atoms, such as a methyl, an ethyl, or a propyl group. Extremely preferred are a phenyl group having, at the 2- and 6-positions, two alkyl groups having 1 to 3 carbon atoms (e.g., 2,6-dimethylphenyl, 2,6-diethylphenyl, and 2-ethyl-6-methylphenyl). Hereinafter, the expression "xylenyl" used in compound names means 2,6-dimethylphenyl unless otherwise indicated.

In general formula (1), n is an integer of 0 or 1, and is preferably 1.

In general formula (1), X is a bond, $-CH_2-$, $-C(CH_3)_2-$, -S-, $-SO_2-$, -O-, -CO-, or -N=N-, and preferably a bond, $-CH_2-$, or $-C(CH_3)_2-$, and more preferably $-C(CH_3)_2-$.

In general formula (1), the repeating unit m is an integer of 0 to 5, and preferably 1 or more, that is the aromatic phosphoric acid ester of formula (1) is a so-called aromatic condensed phosphate ester, more preferably an integer of 1 to 3, further preferably an integer of 1 or 2, especially preferably 1.

Especially preferred examples of the aromatic phosphoric acid ester represented by general formula (1) include at least one aromatic phosphoric acid ester selected from the group consisting of: triphenyl phosphate;

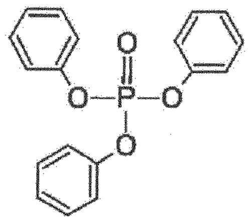

trixylenyl phosphate;

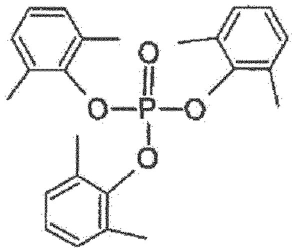

1,3-phenylene bis(diphenyl phosphate);

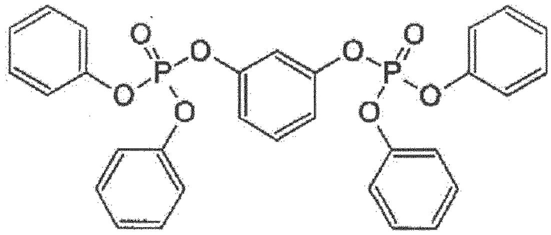

1,3-phenylene bis(dixylenyl phosphate);

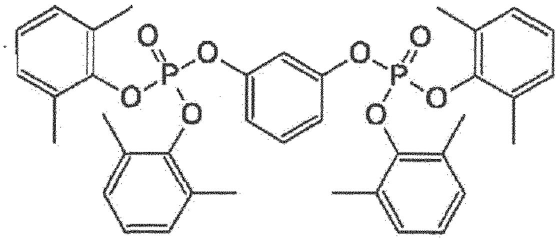

bisphenol-A bis(diphenyl phosphate);

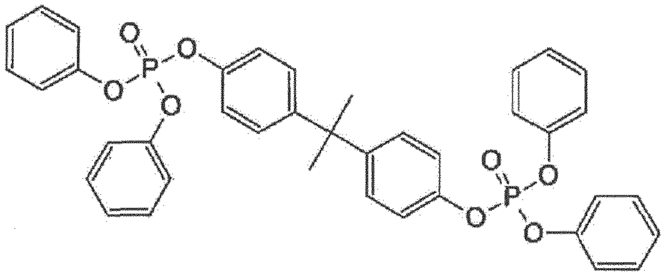

bisphenol-A bis(dixylenyl phosphate);

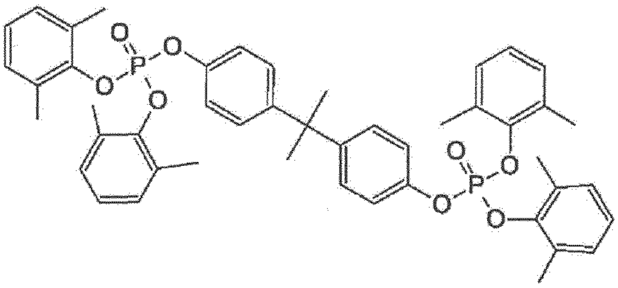

1,4-phenylene bis(dixylenyl phosphate);

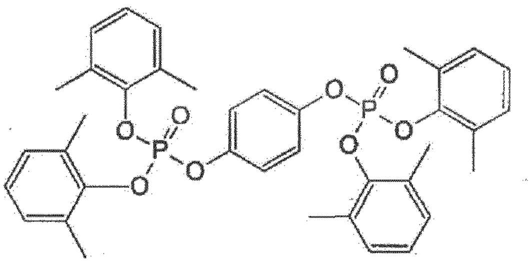

1,4-phenylene bis(diphenyl phosphate);

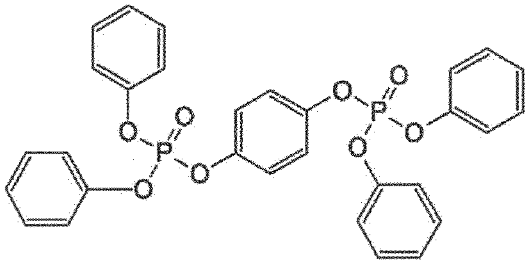

4,4'-biphenylene bis(dixylenyl phosphate);

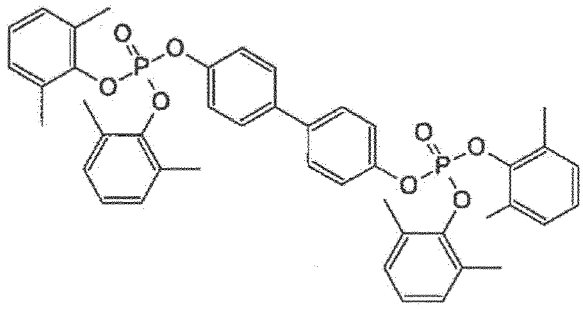

and 4,4'-biphenylene bis(diphenyl phosphate)

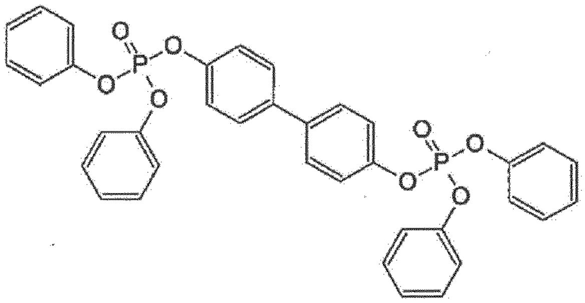

Among the aromatic phosphoric acid esters represented by the above general formula (1), triphenyl phosphate or bisphenol A bis(diphenyl phosphate) is further preferred and bisphenol A bis(diphenyl phosphate) is particularly preferred.

Although the following esters are not represented by general formula (1), a condensed phosphate ester in which phosphoric acid esters are condensed through a polynuclear aromatic residue or heterocyclic residue, such as 1,4-naphthalenediol bis(dixylenyl phosphate):

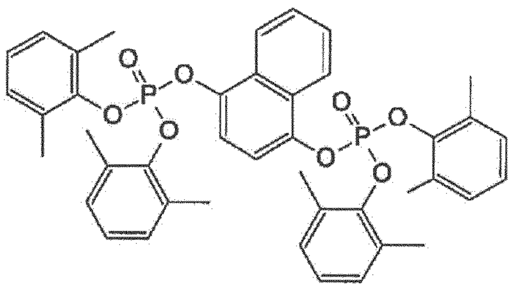

; and 2,5-pyridinediol bis(diphenyl phosphate),

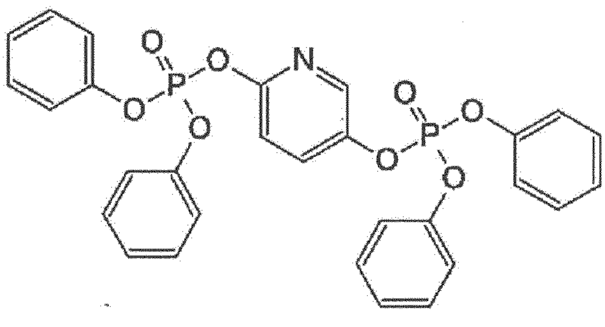

can also be used as preferred an impregnation aid of phosphoric acid esters according to the invention, although those

esters are not represented by general formula (1).

The amount of the phosphoric acid ester which is contained in the carbon fiber bundles to be easily impregnated is 3 to 15 parts by mass, preferably 5 to 12 parts by mass, based on 100 parts by mass of the carbon fibers. Amounts thereof less than 3 parts by mass are undesirable because the impregnation property of polybutylene terephthalate into the carbon fibers is insufficient. Amounts thereof exceeding 15 parts by mass are undesirable because the polybutylene terephthalate as a matrix resin comes to have a lowered glass transition temperature, resulting in molded articles having lowered heat resistance although polybutylene terephthalates have excellent impregnation property into the carbon fibers. In the case where a polyester based on an aliphatic hydroxycarboxylic acid is also used in combination with the phosphoric acid ester as an impregnation aid, the total amount thereof is not particularly limited so long as the total amount thereof is within that range.

[Aliphatic Hydroxycarboxylic Acid-Based Polyester]

The polyester based on an aliphatic hydroxycarboxylic acid which is usable as an impregnation aid in the invention is a polyester constituted by an aliphatic hydroxycarboxylic acid residue. The polyester may be either a homopolyester constituted by a residue of a single aliphatic hydroxycarboxylic acid or a copolyester including residues of a plurality of aliphatic hydroxycarboxylic acids. The polyester based on an aliphatic hydroxycarboxylic acid may be a copolyester including a residue other than an aliphatic hydroxycarboxylic acid residue, such as a diol residue or a dicarboxylic acid residue in an amount of less than 50% by mole based on the residues constituting a polymer. However, a homopolymer into which no comonomer units are intentionally incorporated is preferred from the standpoint of availability.

It is preferable that the polyester based on an aliphatic hydroxycarboxylic acid used in the invention has a weight-average molecular weight of 3,000 to 50,000. In a case when the weight-average molecular weight thereof is in the range of 3,000 to 50,000, these polyesters have a satisfactory affinity for polybutylene terephthalate resins and are easy to emulsify. The range is especially preferably 5,000 to 20,000, even more preferably 8,000 to 15,000. As a method for measuring the weight-average molecular weight, a known method such as high-temperature GPC can be used.

The polyester based on an aliphatic hydroxycarboxylic acid which is usable as an impregnation aid in the invention is not particularly limited. However, preferred are homopolymers of ε-caprolactone, δ-caprolactone, β-propiolactone, γ-butyrolactone, δ-valerolactone, γ-valerolactone, and enantholactone and copolymers of two or more of the monomers. The polyester is more preferably at least one selected from the group consisting of homopolymers of ε-caprolactone, δ-caprolactone, β-propiolactone, γ-butyrolactone, δ-valerolactone, γ-valerolactone, and enantholactone, the homopolymers each having a weight-average molecular weight of 3,000 to 50,000, and copolymers of two or more of the monomers, the copolymers each having a weight-average molecular weight of 3,000 to 50,000. A more preferred range of the weight-average molecular weight of each polymer is as shown above.

Especially preferred are homopolymers of ε-caprolactone or δ-caprolactone which have a weight-average molecular weight of 3,000 to 50,000. In the invention, the expression "polymer of lactones" means not only a polymer produced by actually subjecting the lactone to ring-opening polymerization but also a polymer of the same structure produced from an aliphatic hydroxycarboxylic acid or derivative thereof which is equivalent to the lactones.

The amount of the polyester based on an aliphatic hydroxycarboxylic acid which is adhered to the carbon fiber bundles to be easily impregnated is 3 to 15 parts by mass, preferably 5 to 12 parts by mass, based on 100 parts by mass of the carbon fibers. Amounts thereof less than 3 parts by mass are undesirable because the impregnation property of polybutylene terephthalate into the carbon fibers is insufficient. Amounts thereof exceeding 15 parts by mass are undesirable because the polybutylene terephthalate as a matrix resin comes to have a lowered glass transition temperature, resulting in a shaped product having lowered heat resistance although excellent impregnation property is obtained.

[Material for Molding]

The material for molding of the invention is constituted by the carbon fiber bundles to be easily impregnated described above and a polybutylene terephthalate which is adhered to the carbon fiber bundles to be easily impregnated in an amount of 50 to 2,000 parts by mass based on 100 parts by mass of the carbon fibers contained in the carbon fiber bundles to be easily impregnated. The amount of the adhered polybutylene terephthalate is more preferably 66 to 1,900 parts by mass. The amount of the adhered polybutylene terephthalate is further preferably 100 to 600 parts by mass. The shape of the material for molding of the invention is not particularly limited, and examples thereof include columnar, platy, granular, massive, fibrous (stringy), and net shapes. It is also possible to use a plurality of materials for molding having different shapes and to mold these materials.

Examples of a method for adhering the polybutylene terephthalate to the carbon fiber bundles to be easily impregnated to obtain the material for molding of the invention includes a method for covering the surface of the carbon fiber bundles to be easily impregnated with a molten-state polybutylene terephthalate, a method for casting a molten-state polybutylene terephthalate on the carbon fiber bundles to be easily impregnated, the carbon fiber bundles arranged in parallel, using a T-die or the like to superpose a layer of the polybutylene terephthalate, a method for layering a film-form polybutylene terephthalate resin on the carbon fiber bundles to be easily impregnated arranged in parallel, and a method for spraying a powdery polybutylene terephthalate on the carbon fiber bundles to be easily impregnated arranged in parallel. It is also possible to similarly use a lump of cut fiber bundles obtained by cutting the carbon fiber bundles to be easily impregnated into a specific length, in place of the continuous carbon fiber bundles to be easily impregnated, the continuous carbon fiber bundles arranged in parallel.

It is preferred that the material for molding of the invention has a core-sheath structure in which the carbon fibers bundle which are easily impregnated is a core component and the polybutylene terephthalate is a sheath component. In particular, in the case where the material for molding of the invention is used for injection molding, this material for molding is more preferably a pellet having a core-sheath structure in which the carbon fiber bundles which are easily impregnated is a core component and the polybutylene terephthalate is a sheath component, the core-sheath structure obtained by cutting, with a strand cutter, strands including the carbon fiber bundles to be easily impregnated and the polybutylene terephthalate that covers the periphery of the carbon fiber bundles to be easily impregnated. Even more preferably, this material for molding is a pellet having a longitudinal-direction length of about 3 to 10 mm (hereinafter often referred to as a core-sheath pellet). There are no particular limitations on the diameter of the core-sheath pellet. However, the diameter thereof is preferably from 1/10 to 2 times the length of the pellet, and is more preferably from 1/4 the length of the pellet to the same dimension as the length of the pellet.

[Polybutylene Terephthalate]

Polybutylene terephthalate resin for use in the invention is, for example, a polybutylene terephthalate homopolymer obtained by polycondensation of 1,4-butanediol with terephthalic acid or a lower alkyl alcohol ester derivative thereof, or a copolymer containing polybutylene terephthalate as a main component.

The melting point of the polybutylene terephthalate homopolymer is preferably 224°C and the melting point of the polybutylene terephthalate copolymer is preferably from 150 to 230°C, further preferably from 170 to 210°C.

In the polybutylene terephthalate copolymer, the acid component monomer having two or more functionalities to be copolymerized includes, as components other than terephthalic acid or lower alcohol ester derivatives thereof mentioned above, aliphatic or aromatic polybasic acids such as isophthalic acid, naphthalenedicarboxylic acid, adipic acid, sebacic acid, trimellitic acid, and succinic acid or derivatives of the aliphatic or aromatic polybasic acids capable of forming esters; aromatic hydroxycarboxylic acids such as hydroxybenzoic acid and hydroxynaphthoic acid or derivatives of the aromatic hydrocycarboxylic acid capable of forming esters; and the like. The polyhydroxy component monomer having two or more functionalities to be polycondensed with the acid component monomer includes, as components other than 1,4-butanediol mentioned above, lower alkylene glycols such as ethylene glycol, diethylene glycol, propylene glycol, trimethylene glycol, hexamethylene glycol, neopentyl glycol, cyclohexanedimethanol, and 1,3-octanediol; aromatic polyhydroxy compounds such as 2,2-bis(4-hydroxyphenyl)propane (bisphenol A) and 4,4'-dihydroxybiphenyl; alkylene oxide adducts of aromatic polyhydroxy compounds, such as an ethylene oxide (2 mol) adduct of bisphenol A and a propylene oxide (3 mol) adduct of bisphenol A; polyols such as glycerin and pentaerythritol; and the like.

In the invention, such types of polybutylene terephthalates formed by polycondensing the acid component monomers and polyhydroxy component monomers as mentioned above can be all used. The above each component monomer can be used solely or as a mixture of two or more thereof but, from the standpoint of requiring physical properties intrinsic to polybutylene terephthalate, the polybutylene terephthalate homopolymer is preferably used.

As manufacturing methods of the polybutylene terephthalate homopolymer or copolymer, polymerization may be conducted by (i) a method of directly polymerizing 1,4-butanediol, terephthalic acid, and, if necessary, comonomer component(s); (ii) a method of polymerization through transesterification thereof; or the like, which are not special ones but are commonly known. Hereinafter, except for the case where discrimination is necessary, the polybutylene terephthalate homopolymer or copolymer is simply referred to as polybutylene terephthalate (resin).

The polybutylene terephthalate rein for use in the invention may be one in which the end of the molecular chain thereof is blocked by the reaction with an alkylation agent, an acylation agent, a silylation agent, an oxazoline compound, an epoxy compound, a carbodiimide compound, or the like. Moreover, for the purpose of enhancing flowability, appearance glossiness, flame retardant properties, thermal stability, weather resistance, impact resistance, and the like, various polymers, fillers, stabilizers, pigments, and the like may be blended within a range where mechanical strength is not impaired. Meanwhile, for the purpose of enhancing flame retardancy, it is also possible to blend a phosphoric acid ester as a flame retardant into polybutylene terephthalate.

[Shaped Product and Manufacturing Method Thereof]

As stated above, the material for molding of the invention is molded by an existing thermoplastic-resin molding method without subjecting the material for molding to a treatment for impregnating reinforcing fibers with a thermoplastic resin in an independent step as in conventional techniques. As a result, the polybutylene terephthalate is impregnated into the carbon fiber bundles to be easily impregnated in the material for molding, and the material for molding melts and flows, and spreads in the mold while spreading the carbon fiber bundles to obtain a shaped product having satisfactory properties.

Namely, this application further includes: an invention relating to a shaped product formed from the material for molding of the invention; and an invention relating to a method for manufacturing a shaped product characterized by making the material for molding be present in a mold under a condition of the plasticizing temperature or more of the polybutylene terephthalate, and thereby impregnating the polybutylene terephthalate into the carbon fiber bundles to be easily impregnated in the material for molding, molding this material for molding while separating and dispersing the carbon fiber bundles of the carbon fiber bundles to be easily impregnated, and then cooling the molded material.

In the method of the invention for manufacturing a shaped product, the wording "separate and disperse the carbon fiber bundles of the carbon fiber bundles to be easily impregnated" means that the carbon fiber bundles are separated and dispersed to such a degree that the carbon fibers do not form a lump in the shaped product. Thus, a shaped product having excellent properties and an excellent appearance can be obtained even when carbon fiber bundles such as carbon fiber filaments are not completely separated into several thousands to tens of thousands of the constituent single carbon fibers.

When the shaped product of the invention is manufactured, the material for molding described above can be used in any of various forms suitable for the molding method employed.

For example, in the case of injection molding, the material for molding can be used in the form of a pellet (a core-sheath pellet) obtained by cutting strands constituted by the carbon fiber bundles to be easily impregnated and a polybutylene terephthalate that covers the periphery thereof, with a strand cutter into a length of about 3 to 10 mm.

In the case of obtaining a large plate shaped product, press molding is effective. In the case where press molding is conducted, a method in which a plate material for molding constituted by a layer of the carbon fiber bundles to be easily impregnated and the polybutylene terephthalate layered thereon is prepared and this material for molding is heated to the plasticizing temperature or more of the polybutylene terephthalate, put in a press mold, and then molded at a specific pressing pressure. Depending on shapes, or the like, a method in which a material for molding according to the invention is hot-pressed to obtain a preform beforehand and this preform is molded is also effective.

In the case where the shaped product is obtained by molding using the material for molding of the invention without adding another material for molding and/or an additive, as a matter of course, compositions of the material for molding and the shaped product, such as the carbon fiber contents (on the basis of mass) and the carbon fiber content ratios that represent ratios of the carbon fiber contents, are the same. Accordingly, the amounts of the carbon fiber and the polybutylene terephthalate contained in the shaped product of the invention and preferable ranges thereof are as mentioned above for the material for molding.

Meanwhile, in the case where the material for molding of the invention is used and molded without adding any other material for molding or any additive thereto, the content (ratio) of carbon fibers determined by examining either the material for molding or the shaped product obtained can be regarded as the content (ratio) of carbon fibers in the other. Even in the case where the material for molding of the invention is molded after another material for molding and additives, or the like, are added thereto, the content (ratio) of carbon fibers in either the material for molding of the invention or the shaped product can be determined from the content (ratio) of carbon fibers in the other through calculations from the amounts of those ingredients added.

Shaped products of conventional carbon-fiber-reinforced thermoplastic resins are obtained by molding a pellet or the like, as a material, the pellet obtained by melt-kneading a thermoplastic resin and carbon fibers with a twin-screw extruder or the like in order to evenly disperse the carbon fibers in the thermoplastic resin. In this method, however, the carbon fibers are broken in the extruder because of the kneading conducted under high shear, and the shaped product obtained has a carbon fiber length reduced to less than 0.3 mm, resulting in a decrease in the property-enhancing effect of the fibers. In contrast, the shaped product obtained from the material for molding of the invention is excellent in terms of the impregnation property of the polybutylene terephthalate into the carbon fiber bundles, and therefore the carbon fiber bundles need not be kneaded together with the molten resin under high shear. Because of this, the shaped product obtained contains the carbon fibers which remain long, and has excellent mechanical strength.

The shaped product of the invention is preferably a shaped product in which the carbon fibers resulting from separation of the carbon fiber bundles to be easily impregnated are dispersed so as to have an average fiber length of 0.3 mm or more, and more preferably is a shaped product in which the carbon fibers are dispersed so as to have an average fiber length of 0.4 mm or more. In the shaped product of the invention, there is no particular upper limit on the average fiber length of the carbon fibers remaining therein, and the average length thereof depends on applications and

the molding method employed. For example, in the case of a shaped product obtained by injection molding in which a pellet obtained by cutting, with a strand cutter, strands constituted by the carbon fiber bundles to be easily impregnated and the polybutylene terephthalate that covers the periphery of the carbon fiber bundles to be easily impregnated are used as a material for molding, the average fiber length of the carbon fibers is generally about 10 mm or less. The higher the degree of impregnation of carbon fiber bundles with a thermoplastic resin is, the more the carbon fibers are apt to break during injection molding. Thus, there are often cases where injection-shaped products have an average fiber length of 2 mm or less.

Furthermore, it is preferable that the shaped product of the invention, when examined with respect to a tensile specimen having a thickness of 4 mm according to ISO standard 527, is satisfy a relationship represented by the following expression (C).

$$\text{Content ratio of carbon fibers (\% by weight)} \times 3 + 90 < \text{tensile strength (MPa)} \quad \text{(C)}$$

The establishment of the expression (C) means that the tensile strength of the shaped product of a carbon fiber reinforced thermoplastic resin is exceedingly high for the content of carbon fibers and that this shaped product is highly preferred from the standpoints of cost and properties.

## Examples

The invention will be explained below in detail by reference to Examples, but the invention should not be construed as being limited to the following Examples.

The impregnation aids used in the Examples and Comparative Examples are shown below. The viscosity of the liquid of each of the impregnation aids was measured with a parallel-plate viscometer using a viscoelastometer (RDA2) manufactured by Rheometric Inc. under the conditions of a strain rate of 1 /s and a temperature of 280°C. The glass transition temperatures of the polybutylene terephthalate and of the resin composition obtained by incorporating an impregnation aid into the polybutylene terephthalate were measured using thermal analyzer DSC-Q20, manufactured by TA Instruments Inc., under the conditions of a temperature raising rate of 20 °C/min.

The heating loss (%/minute) of the impregnation aid is an average value for 3 specimens, which was calculated according to the above formula (i), by using mass change measured with a differential thermal balance from an initial mass $W_{pre}$ (g) of each specimen of the impregnation aid to the mass $W_{post}$ (g) of the each specimen after being heated from room temperature to 280°C at 10 °C/minute and subsequently further kept at 280°C for 15 minutes.

1) Bisphenol A bis(diphenyl phosphate)

The viscosity of the liquid of bisphenol-A bis(diphenyl phosphate) at 280°C is 5 Pa·s. A resin composition obtained by blending a polybutylene terephthalate ($Tg_0$=50°C) and bisphenol-A bis(diphenyl phosphate) in an amount of 10 parts by mass based on 100 parts by mass of the polybutylene terephthalate shows a glass transition temperature $Tg_1$ of 45°C, and the reduction ratio in glass transition temperature ($\Delta Tg$) being defined by expression (A) is 0.5 °C/%, which is larger than 0.2 °C/%. The boiling point of the bisphenol-A bis(diphenyl phosphate) under normal temperature is 340°C or higher and heating loss at 280°C is 0.00 %/minute, which is 2 %/minute or less.

2) Polycaprolactone

The viscosity of the liquid of a polycaprolactone at 280°C is 8 Pa·s. A resin composition obtained by blending a polybutylene terephthalate ($Tg_0$=50°C) and the polycaprolactone in an amount of 5 parts by mass based on 100 parts by mass of the polybutylene terephthalate shows a glass transition temperature $Tg_1$ of 48°C, and the reduction ratio in glass transition temperature ($\Delta Tg$) being defined by expression (A) is 0.4 °C/%, which is larger than 0.2 °C/%.

3) Trimethyl phosphate

The viscosity of the liquid of trimethyl phosphate at 280°C is 2 mPa·s ($2\times10^{-3}$ Pa·s). A resin composition obtained by blending a polybutylene terephthalate ($Tg_0$=50°C) and trimethyl phosphate in an amount of 2 parts by mass based on 100 parts by mass of the polybutylene terephthalate shows a glass transition temperature $Tg_1$ of 49°C, and the reduction ratio in glass transition temperature ($\Delta Tg$) being defined by expression (A) is 0.5 °C/%, which is larger than 0.2 °C/%. Also, the boiling point of the trimethyl phosphate under normal temperature is 193°C

The measuring test methods and evaluation methods used in the Examples and Comparative Examples are as follows.

(Content and Content Ratio of Carbon Fiber in Material for molding, Shaped product, or the Like)

The content of carbon fibers was determined by putting the material for molding such as a pellet or a specimen cut out of the shaped product into a crucible, introducing the crucible into a muffle furnace in which the internal temperature was set at 600°C, thereby burning off the resin component, and calculating the content of carbon fibers from the mass of the residual carbon fibers. Meanwhile, the expression "content ratio of carbon fibers (% by mass)" used for a material for molding or shaped product means the ratio of the mass of the carbon fibers to the whole mass of not only the carbon fibers and the polybutylene terephthalate but also the impregnation aid, and the like.

(Content, Content Ratio of Surface Treatment Agent)

The amount of a surface-treating agent such as an impregnation aid, contained in carbon fiber bundles to be easily impregnated, carbon fiber filaments, or the like, was determined by putting carbon fiber bundles cut out in a length of 1 m into a crucible, introducing the crucible into a muffle furnace in which the internal temperature was set at 550°C for 15 minutes to burn off the surface-treating agent component, and calculating the content of the surface-treating agent from the mass of the residual carbon fibers.

(Measurement of Tensile Strength)

Dumbbell specimens were produced from a material for molding obtained, by means of an injection molding machine and subjected to a measurement of tensile strength in accordance with ISO 527 (JIS K 7161).

(Evaluation of Surface Appearance of Shaped product)

The surface appearance of each of shaped products obtained was examined. The shaped products in which neither any fibrous lump with a diameter of 3 mm or larger, formed by insufficient impregnation of the polybutylene terephthalate into the carbon fiber bundles nor any bubble was observed in the surface thereof are indicated by ○ (good); the shaped products in which a bubble was observed although no such fibrous lump was observed are indicated by Δ (slightly poor); and the shaped products in which such fibrous lump was observed are indicated by × (poor).

(Evaluation of Carbon Fiber Length in Shaped product)

A specimen having a size of 20 mm × 10 mm was cut out of each composite shaped product obtained and heated at 550°C in an oxygen-containing atmosphere for 1.5 hours to burn off the resin component. The residual carbon fibers were added to water containing a surfactant, and this mixture was sufficiently stirred by ultrasonic vibration. The dispersion obtained through the stirring was randomly collected with a measuring spoon to obtain a specimen for evaluation. This specimen was examined with image analyzer Luzex AP, manufactured by Nireco Corp., to measure the lengths of 3,000 fibers. An average of the lengths was calculated to determine the average fiber length of the carbon fibers contained in the shaped product. Details are shown below in Examples and Comparative Examples.

<Example 1>

As an impregnation aid, bisphenol A bis(diphenyl phosphate) (manufactured by Daihachi Chemical Industry Co., Ltd.; CR-741) was used. This impregnation aid was emulsified so as to result in a nonvolatile content of 12% by mass. PAN-based carbon fiber filaments (STS40, manufactured by Toho Tenax Co., Ltd.; corresponding to 24K; fiber diameter, 7.0 μm; number of filaments, 24,000; tensile strength, 4,000 MPa) as carbon fiber bundles were passed through the resultant solution. Thereafter, the carbon fiber filaments were passed between nip rolls to remove the excess adhered solution and then passed over 2 minutes through a hot-air drying oven heated at 180°C, thereby drying the carbon fiber filaments to obtain carbon fiber bundles to be easily impregnated. These carbon fiber bundles to be easily impregnated, obtained by the treatment, were passed along two metallic rolls having a diameter of 60 mm and heated at 200°C, thereby conducting a heat treatment again to obtain carbon fiber bundles to be easily impregnated, in which the impregnation aid was more evenly adhered to the carbon fiber bundles. The carbon fiber bundles to be easily impregnated had a content ratio of the impregnation aid of 5% by mass (5.3 parts by mass based on 100 parts by mass of the carbon fibers).

Subsequently, the carbon fiber bundles to be easily impregnated obtained above were coated with polybutylene

terephthalate (DURANEX (registered trademark) 2002, manufactured by Polyplastics Co., Ltd.) using a crosshead die for electrical-wire coating having an orifice diameter of 3 mm and were then cut into a length of 6 mm, thereby obtaining a material for molding in the form of core-sheath pellets suitable for injection molding, the material for molding having a content ratio of carbon fibers of 20% by mass (the amount of the polybutylene terephthalate was 394.7 parts by mass based on 100 parts by mass of the carbon fibers), a diameter of 3.2 mm, and a length of 6 mm. Using a 110-ton electric injection molding machine (J110AD) manufactured by The Japan Steel Works, Ltd., the material for molding was injection-molded at cylinder temperatures of C1/C2/C3/C4/N=260°C/280°C/280°C/280°C/270°C (C1 to C4 were cavity and N was nozzle) at a molding cycle time of 35 seconds to obtain a dumbbell for tensile test having a thickness of 4 mm. The shaped products obtained had a satisfactory appearance in which neither any fibrous lump nor a bubble, due to dispersion failure, was observed. The shaped products had a tensile strength of 185 MPa to show excellent mechanical properties. The fibers contained in the shaped products had an average length of 1.3 mm. The results obtained are shown in Table 1.

<Example 2>

The same procedure as in Example 1 was conducted, except that the concentration of the solution obtained by emulsifying bisphenol A bis(diphenyl phosphate) as an impregnation aid was adjusted to a nonvolatile content of 25% by weight to treat the carbon fiber filaments, and resulting in obtaining carbon fiber bundles to be easily impregnated, having a content ratio of the impregnation aid of 10% by mass (11.1 parts by mass based on 100 parts by mass of the carbon fibers). The shaped product obtained showed a satisfactory appearance and mechanical properties. The results obtained are shown in Table 1.

<Example 3>

The same procedure as in Example 2 was conducted, except that the coating of the carbon fiber bundles to be easily impregnated with polybutylene terephthalate (DURANEX (registered trademark) 2002, manufactured by Polyplastics Co., Ltd.) using a crosshead die for electrical-wire coating having an orifice diameter of 3 mm was conducted so that the pellet-form material for molding obtained had a content ratio of carbon fibers of 30% by mass (the amount of the polybutylene terephthalate was 222.2 parts by mass based on 100 parts by mass of the carbon fibers). The shaped product obtained showed a satisfactory appearance and mechanical properties. The results obtained are shown in Table 1.

<Example 4>

The same procedure as in Example 1 was conducted, except that, as an impregnation aid, polycaprolactone (PLACCEL (registered trademark) HIP manufactured by Daicel Chemical Industries, Ltd., molecular weight: 10,000), which is an aliphatic hydroxycarboxylic acid-based polyester, was used in place of bisphenol A bis(diphenyl phosphate), and the carbon fiber filaments were treated with an emulsion thereof containing 12% by mass of a non-volatile component to obtain carbon fiber bundles to be easily impregnated having a content ratio of the polycaprolactone impregnation aid of 5% by mass (5.3 parts by mass based on 100 parts by mass of the carbon fiber). The shaped product obtained showed a satisfactory appearance and mechanical properties. The results obtained are shown in Table 1.

<Example 5>

The same procedure as in Example 4 was conducted, except that the concentration of the solution obtained by emulsifying polycaprolactone as an impregnation aid was adjusted to a nonvolatile content of 25% by weight to treat the carbon fiber filaments, and resulting in obtaining carbon fiber bundles to be easily impregnated, having a content ratio of the polycaprolactone impregnation aid of 10% by mass (11.1 parts by mass based on 100 parts by mass of the carbon fibers). The shaped product obtained showed a satisfactory appearance and mechanical properties. The results obtained are shown in Table 1.

<Comparative Example 8>

The same procedure as in Example 1 was conducted, except that, as an impregnation aid, trimethyl phosphate (TMP manufactured by Daihachi Chemical Industry Co., Ltd.) was used in place of bisphenol A bis(diphenyl phosphate), and the carbon fiber filaments were treated with an emulsion thereof containing 25% by mass of a non-volatile component to obtain carbon fiber bundles to be easily impregnated having a content ratio of the trimethyl phosphate impregnation aid of 10% by mass (11.1 parts by mass based on 100 parts by mass of the carbon fiber). The shaped product obtained showed sufficient tensile strength and lumps of fibrous material were not confirmed on the appearance surface but air

bubbles were observed. The results obtained are shown in Table 1.

<Example 7>

The same procedure as in Example 4 was conducted, except that the concentration of the solution obtained by emulsifying polycaprolactone as an impregnation aid was adjusted to a nonvolatile content of 9% by weight to treat the carbon fiber filaments, and resulting in obtaining carbon fiber bundles to be easily impregnated, having a content ratio of the polycaprolactone impregnation aid of 3% by mass (4.0 parts by mass based on 100 parts by mass of the carbon fibers). The shaped product obtained showed sufficient tensile strength and lumps of fibrous material were not confirmed on the appearance surface but air bubbles were observed. The results obtained are shown in Table 1.

<Example 8>

The same procedure as in Example 4 was conducted, except that polycaprolactone which had been heated to 120°C and melted to form a liquid was added dropwise to the surface of the carbon fiber bundles in place of the emulsified solution of polycaprolactone as an impregnation aid, the carbon bundles were passed through a hot bar heated to 120°C to impregnate the molten polycaprolactone into the carbon fiber bundles, and thereby the carbon fiber bundles to be easily impregnated had a content ratio of the polycaprolactone impregnation aid of 8% by mass (8.7 parts by mass based on 100 parts by mass of the carbon fibers). The shaped product obtained showed a satisfactory appearance and mechanical properties. The results obtained are shown in Table 1.

<Comparative Example 1>

The same procedure as in Example 1 was conducted, except that the concentration of the solution obtained by emulsifying bisphenol A bis(diphenyl phosphate) as an impregnation aid was adjusted to a nonvolatile content of 5% by weight to treat the carbon fiber filaments, and resulting in obtaining carbon fiber bundles to be easily impregnated, having a content ratio of the impregnation aid of 2% by mass (2 parts by mass based on 100 parts by mass of the carbon fibers). Lumps of the fiber bundles owing to poor dispersion were present on the surface of the resulting shaped product and tensile strength thereof was also found to be a low value. The results obtained are shown in Table 1.

<Comparative Example 2>

Carbon fiber bundles to be easily impregnated were not prepared using an impregnation aid, but PAN-based carbon fiber filaments (STS40-F13, manufactured by Toho Tenax Co., Ltd.; fiber diameter, 7.0 μm; number of filaments, 24,000) in which a urethane-epoxy-based sizing agent was impregnated in an amount of 1.2% by mass were coated with polybutylene terephthalate (DURANEX (registered trademark) 2002, manufactured by Polyplastics Co., Ltd.). Then, the same procedures as in Example 1 were conducted. Lumps of the fiber bundles owing to poor dispersion were present on the surface of the resulting shaped product and tensile strength thereof was also found to be a low value. The results obtained are shown in Table 1.

<Comparative Example 3>

The same procedure as in Example 2 was conducted, except that polyamide 6 (so-called Nylon 6, UBE Nylon 1015B manufactured by Ube Industries, Ltd.) was used as a resin for coating carbon fiber bundles to be easily impregnated, in place of polybutylene terephthalate. The resulting shaped product had low tensile strength and the appearance was also poor.

<Comparative Example 4>

A carbon fiber-reinforced polybutylene terephthalate (DURANEX (registered trademark) 2002, manufactured by Polyplastics Co., Ltd.) obtained by melt-kneading 100 parts by mass of carbon fibers and 233.3 part by mass of polybutylene terephthalate in a twin-screw extrusion molding machine to form a pellet having a carbon fiber content ratio of 30% by mass was subjected to injection molding under the same conditions as in Example 1. The resulting shaped product showed a satisfactory dispersion state of the carbon fibers, but the average fiber length of the carbon fibers in the shaped product was so short as 0.20 mm and the tensile strength was also not a satisfactory value such as 130 MPa.

<Comparative Example 5>

The same carbon fiber bundles as used in Example 1 was not treated with bisphenol A bis(diphenyl phosphate), which is an aromatic condensed phosphoric acid ester as an impregnation aid, and was coated with polybutylene terephthalate (DURANEX (registered trademark) 2002, manufactured by Polyplastics Co., Ltd.) using a crosshead die for electrical-wire coating having an orifice diameter of 3 mm, and the coated carbon fiber bundles were then cut into a length of 6 mm to obtain a pellet having a carbon fiber content ratio of 20% by mass (394.7 parts by mass of polybutylene terephthalate based on 100 parts by mass of the carbon fibers), a diameter of 3.2 mm, and a length of 6 mm. To the pellet, 5.3 mass of polycaprolactone was added (post-addition) to obtain a material for molding suitable for injection molding. The material for molding was subjected to injection molding under the same conditions as in Example 1 to obtain a dumbbell for tensile test having a thickness of 4 mm. The resulting shaped product had low tensile strength and the appearance was also poor. The results obtained are shown in Table 1.

<Comparative Example 6>

The same procedure as in Example 4 was conducted, except that the concentration of the solution obtained by emulsifying polycaprolactone as an impregnation aid was adjusted to a nonvolatile content of 4.5% by weight to treat the carbon fiber filaments, and resulting in obtaining carbon fiber bundles to be easily impregnated, having a content ratio of the polycaprolactone impregnation aid of 1.5% by mass (2.0 parts by mass based on 100 parts by mass of the carbon fibers). The resulting shaped product had low tensile strength and the appearance was also poor. The results obtained are shown in Table 1.

<Comparative Example 7>

The same procedure as in Example 4 was conducted, except that the concentration of the solution obtained by emulsifying polycaprolactone as an impregnation aid was adjusted to a nonvolatile content of 45% by weight to treat the carbon fiber filaments, and resulting in obtaining carbon fiber bundles to be easily impregnated, having a content ratio of the polycaprolactone impregnation aid of 18% by mass (20.0 parts by mass based on 100 parts by mass of the carbon fibers). The resulting shaped product had low tensile strength although the appearance was good. The results obtained are shown in Table 1.

In the above Examples 1 to 8, since the carbon fibers were well dispersed and shaped products having excellent mechanical properties were obtained, it is apparent that the carbon fiber bundles to be easily impregnated were smoothly impregnated with polybutylene terephthalate at the time of molding using the materials for molding of the invention. The present inventors attempted to directly confirm the degree of impregnation property of the carbon fiber bundles to be easily impregnated. However, an operation of collecting a sample with quickly stopping the molding machine at the time of the injection molding in a stage that the material for molding was plasticized and the carbon fiber bundles to be easily impregnated began to be impregnated with polybutylene terephthalate was problematic in safety, and also there is a possibility of damaging the molding machine, so that such an operation was difficult to be conducted.

Therefore, the present inventors prepared a specimen by: using carbon fiber bundles to be easily impregnated, carbon fiber filaments, and the like same as in each of the above Examples or Comparative Examples; prepared a material for molding by placing a sheet-like polybutylene terephthalate thereon; and heating the material for molding on a metal plate during a short time to obtain a specimen. The present inventors then determined impregnation ratio of the polybutylene terephthalate is a matrix resin (hereinafter referred to as "matrix resin impregnation ratio" including the case where a thermoplastic resin other than the polybutylene terephthalate is used) for each specimen obtained to evaluate impregnation property of the specimens. Hereinafter, the obtained results of the evaluation in the impregnation property for the carbon fiber bundles to be easily impregnated or the like of Examples 1 to 8 and Comparative Examples 1 to 8 are shown as Reference Examples A to G and Comparative Reference Examples A to F, respectively.

<Reference Example A>

A sheet-like polybutylene terephthalate (DURANEX (registered trademark) 2002, manufactured by Polyplastics Co., Ltd.) having a thickness of 300 $\mu$m, a width of 10 mm, and a length of 20 mm was placed on the upper surface of carbon fiber bundles to be easily impregnated (width: 10 mm, length: 20 mm) having a content ratio of bisphenol A bis(diphenyl phosphate) of 5% by mass (5.3 parts by mass based on 100 parts by mass of the carbon fibers) obtained by the same operations as in Example 1, and the carbon fiber bundles in this state were put on a hot plate heated at 280°C, and thereby heating the carbon fiber bundles to be easily impregnated and the sheet-like polybutylene terephthalate for 2 minutes. A part where the carbon fiber bundles to be easily impregnated were impregnated with the polybutylene terephthalate melted by heating became a wet state and carbon single fibers were fixed with the polybutylene

terephthalate. On the other hand, in a part where no impregnation with the polybutylene terephthalate occurred in the carbon fiber bundles, no fixation of the carbon single fibers with the polybutylene terephthalate was observed in a dry state, and the carbon single fibers are prone to be separated. Therefore, carbon single fibers were separated in the part of the specimen after heating where no impregnation with polybutylene terephthalate occurred, and the mass of the carbon single fibers was measured. According to the following calculation formula (D), the matrix resin impregnation ratio into the carbon fiber bundles to be easily impregnated in the case where the matrix resin was the polybutylene terephthalate was calculated.

Matrix resin impregnation ratio (% by mass) = 100 - (Mass of carbon single fibers in which polybutylene terephthalate as a matrix resin is unimpregnated/Mass of carbon fiber bundles) $\times$ 100 ... (D)

The matrix resin impregnation ratio was 98% by mass, which was extremely high, and it was confirm that the carbon fiber bundles to be easily impregnated, used in Example 1, were extremely easily impregnated with the polybutylene terephthalate.

<Reference Example B>

The same procedure as in Reference Example A was conducted, except for using the carbon fiber bundles to be easily impregnated (width, 10 mm; length, 20 mm) having a content ratio of bisphenol A bis(diphenyl phosphate) was 10% by mass (11.1 parts by mass based on 100 parts by mass of the carbon fibers), the carbon fiber bundles to be easily impregnated obtained in the same manner as in Examples 2 and 3. The degree of matrix resin impregnation was as extremely high as 100% by mass, and it was able to be ascertained that the carbon fiber bundles to be easily impregnated used in Examples 2 and 3 were highly apt to be impregnated with the polybutylene terephthalate.

<Reference Example C>

The same procedure as in Reference Example A was conducted, except for using the carbon fiber bundles to be easily impregnated (width: 10 mm, length: 20 mm) having a content of the polycaprolactone impregnation aid of 5% by mass (5.3 parts by mass based on 100 parts by mass of the carbon fibers), the carbon fiber bundles to be easily impregnated obtained by the same operations as in Example 4. The matrix resin impregnation ratio was 96% by mass, which was extremely high, and it was confirm that the carbon fiber bundles to be easily impregnated used in Example 4 were extremely easily impregnated with the polybutylene terephthalate.

<Reference Example D>

The same procedure as in Reference Example A was conducted, except for using the carbon fiber bundles to be easily impregnated (width: 10 mm, length: 20 mm) having a content of the polycaprolactone impregnation aid of 10% by mass (11.1 parts by mass based on 100 parts by mass of the carbon fibers), the carbon fiber bundles to be easily impregnated obtained by the same operations as in Example 5. The matrix resin impregnation ratio was 100% by mass, which was extremely high, and it was confirm that the carbon fiber bundles to be easily impregnated used in Example 5 were extremely easily impregnated with the polybutylene terephthalate.

<Reference Example E>

The same procedure as in Reference Example A was conducted, except for using the carbon fiber bundles to be easily impregnated (width: 10 mm, length: 20 mm) having a content of the trimethyl phosphate impregnation aid of 10% by mass (11.1 parts by mass based on 100 parts by mass of the carbon fibers), the carbon fiber bundles to be easily impregnated obtained by the same operations as in Example 6. The matrix resin impregnation ratio was 80% by mass, which was high, and it was confirm that the carbon fiber bundles to be easily impregnated used in Example 6 were easily impregnated with the polybutylene terephthalate.

<Reference Example F>

The same procedure as in Reference Example A was conducted, except for using the carbon fiber bundles to be easily impregnated (width: 10 mm, length: 20 mm) having a content of the polycaprolactone impregnation aid of 3%

by mass (4 parts by mass based on 100 parts by mass of the carbon fibers), the carbon fiber bundles to be easily impregnated obtained by the same operations as in Example 7. The matrix resin impregnation ratio was 90% by mass, which was high, and it was confirm that the carbon fiber bundles to be easily impregnated used in Example 7 were easily impregnated with the polybutylene terephthalate.

<Reference Example G>

The same procedure as in Reference Example A was conducted, except for using the carbon fiber bundles to be easily impregnated (width: 10 mm, length: 20 mm) having a content of the polycaprolactone impregnation aid of 8% by mass (5.3 parts by mass based on 100 parts by mass of the carbon fibers), the carbon fiber bundles to be easily impregnated obtained by the same operations as in Example 8. The matrix resin impregnation ratio was 100% by mass, which was extremely high, and it was confirm that the carbon fiber bundles to be easily impregnated used in Example 8 were extremely easily impregnated with the polybutylene terephthalate.

<Comparative Reference Example A>

The same procedure as in Reference Example A was conducted, except for using the carbon fiber bundles (width: 10 mm, length: 20 mm) having a content of the bisphenol A bis(diphenyl phosphate) impregnation aid of 2% by mass (2 parts by mass based on 100 parts by mass of the carbon fibers), the carbon fiber bundles obtained by the same operations as in Comparative Example 1. The matrix resin impregnation ratio was 45% by mass, which was low, and it was confirm that the carbon fiber bundles having a content of the impregnation aid of 2% by mass, used in Comparative Example 1 were not easily impregnated with the polybutylene terephthalate.

<Comparative Reference Example B>

The same procedure as in Reference Example A was conducted, except for using the carbon fiber filaments (STS40-F13, manufactured by Toho Tenax Co., Ltd.; fiber diameter, 7.0 μm; number of filaments, 24,000) in which a urethane-epoxy-based sizing agent was impregnated in an amount of 1.2% by mass same as in Comparative Example 2 in place of carbon fiber bundles to be easily impregnated. The matrix resin impregnation ratio was 6% by mass, which was extremely low, and it was confirm that the carbon fiber filaments used in Comparative Example 2 were extremely difficult to be impregnated with the polybutylene terephthalate.

<Comparative Reference Example C>

The same procedure as in Reference Example A was conducted, except for using, in place of the sheet-like polybutylene terephthalate (DURANEX (registered trademark) 2002, manufactured by Polyplastics Co., Ltd.) having a thickness of 300 μm, a width of 10 mm, and a length of 20 mm, a sheet-like article of polyamide 6 (UBE Nylon 1015B manufactured by Ube Industries, Ltd.) having the same size as therein and placing the sheet like article of polyamide 6 on the upper surface of carbon fiber bundles to be easily impregnated (width: 10 mm, length: 20 mm) having a content ratio of bisphenol A bis(diphenyl phosphate) of 10% by mass (11.1 parts by mass per 100 parts by mass of the carbon fiber), the carbon fiber bundles to be easily impregnated obtained by the same operations as in Examples 2 and 3. The matrix resin impregnation ratio calculated according to the above calculation formula (D) in which as the matrix resin, polybutylene terephthalate was replaced with polyamide 6 was as extremely low as 4% by mass, and it was found that the carbon fiber bundles to be easily impregnated used in Example 2 was extremely difficult to be impregnated with polyamide 6.

<Comparative Reference Example D>

The same procedure as in Reference Example A was conducted, except for using, in place of carbon fiber bundles to be easily impregnated, the carbon fiber bundles having a content ratio of the polycaprolactone impregnation aid of 1.2% by mass, the carbon fiber bundles obtained by post-adding the impregnation aid in the same procedure as in Comparative Example 5. The matrix resin impregnation ratio was 2% by mass, which was extremely low, and it was confirm that the carbon fiber filaments used in Comparative Example 5 were extremely difficult to be impregnated with the polybutylene terephthalate.

<Comparative Reference Example E>

The same procedure as in Reference Example A was conducted, except for using the carbon fiber bundles

having a content ratio of the polycaprolactone impregnation aid of 1.5% by mass, the carbon fiber bundles obtained by the same procedure as in Comparative Example 6. The matrix resin impregnation ratio was 30% by mass, which was low, and it was confirm that the carbon fiber bundles having a content of the impregnation aid of 1.5% by mass, used in Comparative Example 6 were not easily impregnated with the polybutylene terephthalate.

<Comparative Reference Example F>

The same procedure as in Reference Example A was conducted, except for using the carbon fiber bundles having a content ratio of the polycaprolactone impregnation aid of 18% by mass, the carbon fiber bundles obtained by the same procedure as in Comparative Example 7. The matrix resin impregnation ratio was 100% by mass, which was extremely high, and it was confirm that the carbon fiber bundles to be easily impregnated used in Comparative Example 7 were extremely easily impregnated with the polybutylene terephthalate.

Table 1

Table 1

| | Example 1 | Example 2 | Example 3 | Example 4 | Example 5 | Comparative Example 8 | Example 7 | Example 8 |
|---|---|---|---|---|---|---|---|---|
| Amount of matrix resin (parts by mass based on 100 parts by mass of carbon fibers) | | | | | | | | |
| Polybutylene terephthalate | 394.7 | 388.9 | 222.2 | 394.7 | 388.9 | 388.9 | 396 | 394.7 |
| Polyamide 6 | - | - | - | - | - | - | - | - |
| Content of surface treatment agent (parts by mass based on 100 parts by mass of carbon fibers) [Impregnation aid] | | | | | | | | |
| Bisphenol A bis(diphenyl phosphate) | 5.3 | 11.1 | 11.1 | - | - | - | - | - |
| Trimethyl phosphate | - | - | - | - | - | 11.1 | - | - |
| Triphenyl phosphate | - | - | - | - | - | - | - | - |
| Polycaprolactone | - | - | - | 5.3 | 11.1 | - | 4 | 8.7 |
| [Other treatment agent] | | | | | | | | |
| Urethane-epoxy-based sizing agent | - | - | - | - | - | - | - | - |
| Addition method of surface treatment agent | emulsion | emulsion | emulsion | emulsion | emulsion | emulsion | emulsion | (*2) |
| Content ratio of surface treatment agent in carbon fiber bundles | 5% | 10% | 10% | 5% | 10% | 10% | 3% | 8% |
| [Shaped product] | | | | | | | | |
| Content ratio of carbon fibers | 20% | 20% | 30% | 20% | 20% | 20% | 20% | 20% |
| Average fiber length [mm] | 1.3 | 1.1 | 0.9 | 1.1 | 0.9 | 1.2 | 1.2 | 1.0 |
| Tensile strength [MPa] | 185 | 183 | 207 | 197 | 223 | 205 | 192 | 201 |
| Appearance of shaped product | O | O | O | O | O | Δ | Δ | O |
| [Evaluation of easy impregnation property of carbon fiber bundles] | | | | | | | | |
| Corresponding Reference Example | Reference Example A | Reference Example B | Reference Example B | Reference Example C | Reference Example D | Reference Example E | Reference Example F | Reference Example G |
| Matrix resin impregnation ratio | 98% | 100% | 100% | 96% | 100% | 80% | 90% | 100% |

*1) % means % by mass unless particularly noted.
*2) Polycaprolactone heated to 120°C and melted to be liquid was added dropwise onto the surface of the carbon fiber bundles and the whole was further passed through a hot bar heated at 120°C so that the carbon bundles was impregnated with the molten polycaprolactone.

Table 1 (continued)

| | Comparative Example 1 | Comparative Example 2 | Comparative Example 3 | Comparative Example 4 | Comparative Example 5 | Comparative Example 6 | Comparative Example 7 |
|---|---|---|---|---|---|---|---|
| Amount of matrix resin (parts by mass based on 100 parts by mass of carbon fibers) | | | | | | | |
| Polybutylene terephthalate | 398 | 398.8 | - | 233.3 | 394.7 | 398 | 380 to 384 |
| Polyamide 6 | - | - | 388.9 | - | - | | |
| Content of surface treatment agent (parts by mass based on 100 parts by mass of carbon fibers) [Impregnation aid] | | | | | | | |
| Bisphenol A bis(diphenyl phosphate) | 2.0 | - | 11.1 | - | - | - | - |
| Trimethyl phosphate | - | - | - | - | - | - | - |
| Triphenyl phosphate | - | - | - | - | - | - | - |
| Polycaprolactone | - | - | - | - | (5.3) | 2.0 | 20.0 |
| [Other treatment agent] Urethane-epoxy-based sizing agent | - | 1.2 | - | - | 1.2 | - | - |
| Addition method of surface treatment agent | emulsion | emulsion | emulsion | - | post- addition of impregnation aid | emulsion | emulsion |
| Content ratio of surface treatment agent in carbon fiber bundles | 2% | 1.2% | 10% | - | 1.2% | 1.5% | 18% |
| [Shaped product] | | | | | | | |
| Content ratio of carbon fibers | 20% | 20% | 20% | 30% | 20% | 20% | 20% |
| Average fiber length [mm] | 1.1 | 2.3 | 1.8 | 0.2 | 2.4 | 1.8 | 0.5 |
| Tensile strength [MPa] | 140 | 129 | 145 | 130 | 148 | 155 | 165 |
| Appearance of shaped product | × | × | × | O | × | × | O |
| [Evaluation of easy impregnation property of carbon fiber bundles] | | | | | | | |
| Corresponding Reference Example | Comparative Reference Example A | Comparative Reference Example B | Comparative Reference Example C | - | Comparative Reference Example D | Comparative Reference Example E | Comparative Reference Example F |
| Matrix resin impregnation ratio | 45% | 6% | 4% | - | 2% | 30% | 100% |

*1) % means % by mass unless particularly noted.

*2) Polycaprolactone heated to 120°C and melted to be liquid was added dropwise onto the surface of the carbon fiber bundles and the whole was further passed through a hot bar heated at 120°C so that the carbon bundles was impregnated with the molten polycaprolactone.

Industrial Applicability

The material for molding of the invention enables manufacturing a shaped product having excellent mechanical strength by a simple process and is extremely useful in various industrial fields such as interior and exterior materials and components of transportation devices such as automobiles, ships, and aircrafts, electric/electronic devices, office appliances, and the like.

## Claims

**1.** A material for molding, comprising:

carbon fiber bundles to be easily impregnated, including carbon fibers and at least one impregnation aid in an amount of 3 to 15 parts by mass based on 100 parts by mass of the carbon fibers, the at least one impregnation aid satisfying the following requirements 1 and 2; and
a polybutylene terephthalate in an amount of 66 to 2000 parts by mass based on 100 parts by mass of the carbon fibers, the polybutylene terephthalate adhered to the carbon fiber bundle to be easily impregnated:

Requirement 1: liquid at 280°C has a viscosity of 10 Pa·s or less;
Requirement 2: a reduction ratio in glass transition temperature (ΔTg) of larger than 0.2 (°C/%), the reduction ratio in glass transition temperature (ΔTg) being defined by the following expression (A) including a glass transition temperature $Tg_1$ (°C) of a resin composition obtained by incorporating the impregnation aid in an amount of 1 part by mass to 100 parts by mass based on 100 parts by mass of the polybutylene terephthalate, a glass transition temperature $Tg_0$ (°C) of the polybutylene terephthalate, and a content (%) of the impregnation aid:

$$\text{Reduction ratio in glass transition temperature } (\Delta Tg)\ (°C/\%) = ((Tg_0\ (°C))-(Tg_1\ (°C))/(\text{content of impregnation aid } (\%)) \qquad (A)$$

wherein the content of impregnation aid (%) is defined by the following expression (B):

$$\text{Content of impregnation aid } (\%) = 100\times(\text{amount of impregnation aid (parts by mass)})/(\text{amount of the polybutylene terephthalate (parts by mass)}) \qquad (B),$$

the viscosity of the liquid of the impregnation aid is measured by using a parallel-plate viscometer equipped with a high-temperature chamber under the conditions of a strain rate of 1 /s and a temperature of 280°C,
the glass transition temperature of the polybutylene terephthalate and of the resin composition obtained by incorporating the impregnation aid in the polybutylene terephthalate is measured by using a differential scanning calorimeter under the conditions of a temperature rising rate of 20 °C/min,
wherein the impregnation aid is one or more selected from the group consisting of a phosphoric acid ester and an aliphatic hydroxycarboxylic acid-based polyester, wherein the phosphoric acid ester is an aromatic phosphoric acid ester having a boiling point under normal pressure of 340°C or higher and a heating loss at 280°C under a nitrogen atmosphere of 2 %/minute or less.

**2.** The material for molding according to claim 1,
wherein the aromatic phosphoric acid ester is represented by the following general formula (1):

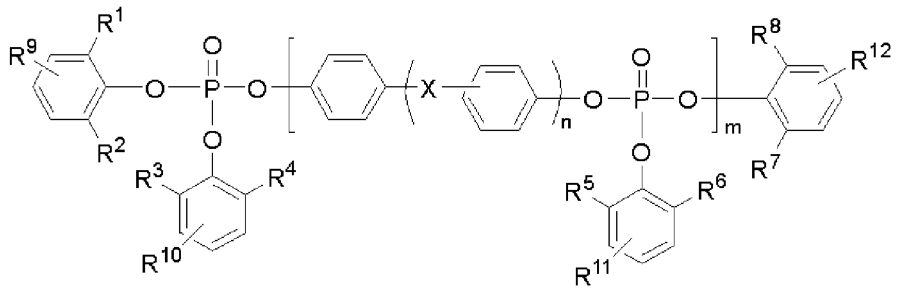

(1)

wherein $R^1$ to $R^{12}$ each independently represent a hydrogen atom or an alkyl group having 1 to 4 carbon atoms,
X is a bond, $-CH_2-$, $-C(CH_3)_2-$, -S-, $-SO_2-$, -O-, -CO- or -N=N-,
n is an integer of 0 or 1, and
m is an integer of 0 to 5.

**3.** The material for molding according to claim 1,
wherein the aliphatic hydroxycarboxylic acid-based polyester is one or more selected from the group consisting of homopolymers of each of ε-caprolactone, δ-caprolactone, β-propiolactone, γ-butyrolactone, δ-valerolactone, γ-valerolactone, and enantholactone, the homopolymers having a weight-average molecular weight of 3,000 to 50,000, and copolymers of two or more monomers of ε-caprolactone, δ-caprolactone, β-propiolactone, γ-butyrolactone, δ-valerolactone, γ-valerolactone, and enantholactone, the copolymers having a weight-average molecular weight of 3,000 to 50,000.

**4.** The material for molding according to any one of claims 1 to 3, which has a sheath-core structure in which the carbon fiber bundles to be easily impregnated are a core component and the polybutylene terephthalate is a sheath component.

**5.** The material for molding according to any one of claims 1 to 4,
wherein a form of the material for molding is a pellet.

**6.** The material for molding according to claim 5,
wherein a length of the pellet in a longitudinal direction is from 3 to 10 mm.

**7.** A shaped product obtained from the material for molding according to any one of claims 1 to 6.

**8.** The shaped product according to claim 7,
wherein the carbon fibers derived from the carbon fiber bundles to be easily impregnated are dispersed in a state of having an average fiber length of 0.3 mm or more.

**9.** The shaped product according to claim 7 or 8,
wherein a content ratio (% by mass) of the carbon fibers and a tensile strength determined by examination of a 4 mm dumbbell according to ISO 527 standard have a relationship satisfying the following expression (C):

$$\text{Content ratio of carbon fiber (\% by mass)} \times 3 + 90 < \text{Tensile strength (MPa)} \ldots \text{(C)}.$$

**10.** The method for manufacturing the shaped product according to any one of claims 7 to 9, the method comprising:

placing the material for molding in a mold under a condition of a plasticizing temperature or higher of the polybutylene terephthalate to impregnate the polybutylene terephthalate into the carbon fiber bundles to be easily impregnated in the material for molding;
molding the material for molding while separating and dispersing carbon fiber bundles in the carbon fiber bundles to be easily impregnated; and
cooling a molded material.

## Patentansprüche

1. Material zum Formen, umfassend:

leicht imprägnierbare Kohlenstofffaserbündel, umfassend Kohlenstofffasern und wenigstens ein Imprägnierhilfsmittel in einer Menge von 3 bis 15 Masseteilen bezogen auf 100 Masseteile der Kohlenstofffasern, wobei das wenigstens eine Imprägnierhilfsmittel den nachstehenden Bedingungen 1 und 2 entspricht; und
ein Polybutylenterephthalat in einer Menge von 66 bis 2000 Masseteilen bezogen auf 100 Masseteile der Kohlenstofffasern, wobei das Polybutylenterephthalat an den leicht imprägnierbaren Kohlenstofffaserbündeln haftet;

Bedingung 1: die Flüssigkeit hat bei 280 °C eine Viskosität von 10Pa·s oder weniger;
Bedingung 2: ein Verringerungsverhältnis der Glasübergangstemperatur (ΔTg) von größer als 0,2 (°C/%), wobei das Verringerungsverhältnis der Glasübergangstemperatur (ΔTg) durch den nachstehenden Ausdruck (A) definiert ist, der eine Glasübergangstemperatur $Tg_1$ (°C) einer Harzzusammensetzung, erhalten durch Einverleiben des Imprägnierhilfsmittels in einer Menge von 1 Masseteil bis 100 Masseteile bezogen auf 100 Masseteile des Polybutylenterephthalats, eine Glasübergangstemperatur $Tg_0$ (°C) des Polybutylenterephthalats und einen Gehalt (%) an dem Imprägnierhilfsmittel umfasst:

$$\text{Verringerungsverhältnis der Glasübergangstemperatur } (\Delta Tg)\ (°C/\%) = ((Tg_0\ (°C)) - (Tg_1\ (°C)) / (\text{Gehalt an Imprägnierhilfsmittel } (\%)) \qquad (A)$$

wobei der Gehalt an Imprägnierhilfsmittel (%) durch den nachstehenden Ausdruck (B) definiert ist:

$$\text{Gehalt an Imprägnierhilfsmittel } (\%) = 100 \times (\text{Menge an Imprägnierhilfsmittel (Masseteile)}) / (\text{Menge des Polybutylenterephthalats (Masseteile)}) \quad (B),$$

die Viskosität der Flüssigkeit des Imprägnierhilfsmittels auf einem Parallelplattenviskosimeter mit einer Hochtemperaturkammer unter den Bedingungen einer Deformationsrate von 1/s und einer Temperatur von 280 °C gemessen wird,
die Glasübergangstemperatur des Polybutylenterephthalats und der durch Einverleiben des Imprägnierhilfsmittels in das Polybutylenterephthalat erhaltenen Harzzusammensetzung auf einem Differentialkalorimeter unter den Bedingungen einer Temperaturerhöhungsrate von 20 °C/min gemessen wird,
wobei es sich bei dem Imprägnierhilfsmittel um eines oder mehrere aus der Gruppe bestehend aus einem Phosphorsäureester und einem Polyester auf Basis einer aliphatischen Hydroxycarbonsäure handelt, wobei es sich bei dem Phosphorsäureester um einen aromatischen Phosphorsäureester mit einem Siedepunkt unter Normaldruck von 340 °C oder höher und einem Wärmeverlust bei 280 °C unter Stickstoffatmosphäre von 2 %/Minute oder weniger handelt.

2. Material zum Formen gemäß Anspruch 1,
wobei der aromatische Phosphorsäureester durch die folgende allgemeine Formel (1) dargestellt wird:

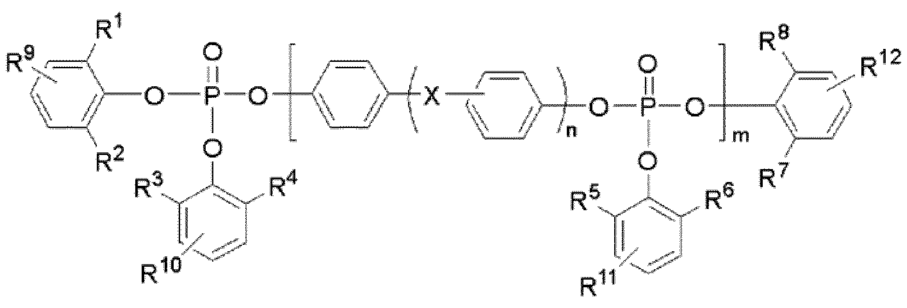

(1)

wobei $R^1$ bis $R^{12}$ jeweils unabhängig für ein Wasserstoffatom oder eine Alkylgruppe mit 1 bis 4 Kohlenstofatomen stehen,
X eine Bindung, $-CH_2-$, $-C(CH_3)_2-$, -S-, $-SO_2-$, -O-, -CO- oder -N=N- ist,

n eine ganze Zahl von 0 oder 1 ist und
m eine ganze Zahl von 0 bis 5 ist.

3. Material zum Formen gemäß Anspruch 1, wobei es sich bei dem Polyester auf Basis einer aliphatischen Hydroxycarbonsäure um eines oder mehrere aus der Gruppe bestehend aus Homopolymeren von jedem von ε-Caprolacton, δ-Caprolacton, β-Propiolacton, γ-Butyrolacton, δ-Valerolacton, γ-Valerolacton und Enantholacton, wobei die Homopolymere ein gewichtsmittleres Molekulargewicht von 3000 bis 50000 aufweisen, und Copolymeren von zwei oder mehr Monomeren von ε-Caprolacton, δ-Caprolacton, β-Propiolacton, γ-Butyrolacton, δ-Valerolacton, γ-Valerolacton und Enantholacton, wobei die Copolymere ein gewichtsmittleres Molekulargewicht von 3000 bis 50000 aufweisen, handelt.

4. Material zum Formen gemäß einem der Ansprüche 1 bis 3, das eine Mantel-Kern-Struktur aufweist, bei der die leicht imprägnierbaren Kohlenstofffaserbündel eine Kernkomponente sind und das Polybutylenterephthalat eine Mantelkomponente ist.

5. Material zum Formen gemäß einem der Ansprüche 1 bis 4,
wobei eine Form des Materials zum Formen ein Pellet ist.

6. Material zum Formen gemäß Anspruch 5,
wobei eine Länge des Pellets in einer Längsrichtung 3 bis 10 mm beträgt.

7. Formkörper, erhalten aus dem Material zum Formen gemäß einem der Ansprüche 1 bis 6.

8. Formkörper gemäß Anspruch 7,
wobei die Kohlenstofffasern, die aus den leicht imprägnierbaren Kohlenstofffaserbündeln abgeleitet sind, in einem Zustand mit einer mittleren Faserlänge von 0,3 mm oder mehr dispergiert sind.

9. Formkörper gemäß Anspruch 7 oder 8,
wobei der Gehaltsanteil (Masse-%) an Kohlenstofffasern und die Zugfestigkeit, bestimmt durch Untersuchung eines 4-mm-Hantelkörpers gemäß ISO-Norm 527, eine Beziehung aufweisen, die dem nachstehenden Ausdruck (C) entspricht:

$$\text{Gehaltsanteil an Kohlenstofffaser (Masse-\%)} \times 3 + 90 < \text{Zugfestigkeit (MPa)} \ldots \text{(C)}.$$

10. Verfahren zum Herstellen des Formkörpers gemäß einem der Ansprüche 7 bis 9, wobei das Verfahren umfasst:

Einbringen des Materials zum Formen in ein Formwerkzeug unter der Bedingung der Plastifiziertemperatur des Polybutylenterephthalats oder höher, um das Polybutylenterephthalat in die leicht imprägnierbaren Kohlenstofffaserbündel in dem Material zum Formen zu imprägnieren;
Formen des Materials zum Formen unter Trennen und Dispergieren von Kohlenstofffaserbündeln in den leicht imprägnierbaren Kohlenstofffaserbündeln; und
Abkühlen des geformten Materials.

**Revendications**

1. Matériau à mouler comprenant :

des faisceaux de fibres de carbone devant être facilement imprégnés, contenant des fibres de carbone et au moins une aide d'imprégnation dans une quantité de 3 à 15 parties en masse pour 100 parties en masse des fibres de carbone, ladite au moins une aide d'imprégnation satisfaisant aux conditions suivantes 1 et 2 ; et
un téréphtalate de polybutylène dans une quantité de 66 à 2 000 parties en masse pour 100 parties en masse

des fibres de carbone, le téréphtalate de polybutylène adhérant aux faisceaux de fibres de carbone devant être facilement imprégnés:

Condition 1 : le liquide à 280 °C a une viscosité de 10 Pa • s ou moins;
Condition 2 : un rapport de réduction de la température de transition vitreuse ($\Delta T_g$) supérieur à 0,2 (°C/%), le rapport de réduction de la température de transition vitreuse ($\Delta T_g$) étant défini par l'expression suivante (A) comprenant une température de transition vitreuse $T_{g1}$ (°C) d'une composition de résine obtenue en incorporant l'aide d'imprégnation dans une quantité de 1 partie en masse à 100 parties en masse pour 100 parties en masse du téréphtalate de polybutylène, une température de transition vitreuse $T_{g0}$ (°C) du téréphtalate de polybutyléne et une quantité (%) de l'aide d'imprégnation :

Rapport de réduction de la température de transition vitreuse ($\Delta_{Tg}$) (°C/%) = (($T_{g0}$ (°C)) - ($T_{g1}$ (°C)) / (quantité d'aide d'imprégnation (%)) (A)

la quantité d'aide d'imprégnation (%) étant définie par l'expression suivante (B) :

Quantité d'aide d'imprégnation (%) = 100 x (quantité d'aide d'imprégnation (parties en masse)) / (quantité du téréphtalate de polybutylène (parties en masse)) (B),

la viscosité du liquide de l'aide d'imprégnation est mesurée en utilisant un viscosimètre à plateaux parallèles équipé d'une chambre à haute température dans les conditions d'une sollicitation de 1/s et d'une température de 280°C,
la température de transition vitreuse du téréphtalate de polybutylène et de la composition de résine obtenue en incorporant l'aide d'imprégnation dans le téréphtalate de polybutylène est mesurée en utilisant un calorimètre à compensation de puissance dans les conditions d'une vitesse d'augmentation de température de 20 °C/min, dans lequel l'aide d'imprégnation est un ou plusieurs éléments choisis parmi le groupe constitué d'un ester d'acide phosphorique et d'un polyester à base d'un acide alipathique hydroxycarboxylique, dans lequel l'ester d'acide phosphorique est un ester d'acide phosphorique aromatique ayant un point d'ébullition sous une pression normale de 340°C ou plus et une perte au chauffage à 280°C sous une atmosphère d'azote de 2 %/minute ou moins.

**2.** Matériau à mouler selon la revendication 1, dans lequel l'ester d'acide phosphorique aromatique est représenté par la formule générale (1) suivante :

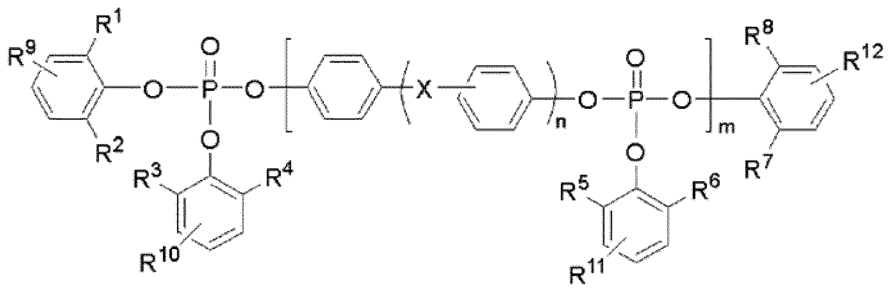

(1)

dans laquelle $R^1$ à $R^{12}$ représentent chacun indépendamment un atome d'hydrogène ou un groupement alkyle ayant de 1 à 4 atomes de carbone,
X est une liaison $-CH_2-$, $-C(CH_3)_2-$, -S-, $-SO_2-$, -O-, -CO- ou -N=N-,
n est un entier valant 0 ou 1 et
m est un entier valant 0 à 5.

**3.** Matériau à mouler selon la revendication 1,
dans lequel le polyester à base d'un acide aliphatique hydroxycarboxylique est un ou plusieurs éléments choisis parmi le groupe constitué des homopolymères de chacune de l'ε-caprolactone, la δ-caprolactone, la β-propiolactone, la γ-butyrolactone, la δ-valérolactone, la γ-valérolactone, et l'énantholactone, les homopolymères ayant un poids moléculaire moyen en poids de 3000 à 50 000, et des copolymères de deux monomères ou plus d'ε-caprolactone, de δ-caprolactone, de β-propiolactone, de δ-butyrolactone, de δ-valérolactone, de δ-valérolactone, et d'énantholactone, les copolyméres ayant un poids moléculaire moyen en poids de 3000 à 50 000.

**4.** Matériau à mouler selon l'une quelconque des revendications 1 à 3, qui a une structure enveloppe-noyau dans laquelle les faisceaux de fibres de carbone devant être facilement imprégnés sont un constituant du noyau et le téréphtalate de polybutylène est un constituant de l'enveloppe.

**5.** Matériau à mouler selon l'une quelconque des revendications 1 à 4,
dans lequel une forme du matériau à mouler est un granulé.

**6.** Matériau à mouler selon la revendication 5,
dans lequel une longueur du granulé dans une direction longitudinale est de 3 à 10 mm.

**7.** Produit formé obtenu à partir du matériau à mouler selon l'une quelconque des revendications 1 à 6.

**8.** Produit formé selon la revendication 7,
dans lequel les fibres de carbone issues des faisceaux de fibres de carbone devant être facilement imprégnés sont dispersées dans un état où la longueur moyenne des fibres est de 0,3 millimètre ou plus.

**9.** Produit formé selon la revendication 7 ou 8,
dans lequel une teneur (% en masse) en fibres de carbone et une résistance à la traction déterminée par examen d'une éprouvette en forme d'haltère de 4 millimètres selon la norme ISO 527 ont un rapport satisfaisant à l'expression suivante (C) :

(Teneur en fibre de carbone (% en masse) x 3 + 90
< Résistance à la traction (MPA)… (C).

**10.** Procédé de fabrication du produit formé selon l'une quelconque des revendications 7 à 9, le procédé comprenant :

la disposition du matériau à mouler dans un moule sous une condition qui est une température de plastification du téréphtalate de polybutylène ou une température supérieure à celle-ci pour imprégner le téréphtalate de polybutylène dans les faisceaux de fibres de carbone devant être facilement imprégnés dans le matériau à mouler ;
le moulage du matériau à mouler tout en séparant et en dispersant des faisceaux de fibres de carbone dans les faisceaux de fibres de carbone devant être facilement imprégnés ; et le refroidissement d'un matériau moulé.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 3121146 A
- JP 3181528 A
- JP 5112657 A
- JP 6166961 A